# EUROPÄISCHE PATENTSCHRIFT

(11) **EP 3 272 004 B1**
(45) Veröffentlichungstag und Bekanntmachung des Hinweises auf die Patenterteilung: **09.03.2022**
(21) Anmeldenummer: 16706327.0
(22) Anmeldetag: 16.02.2016
(51) Int. Cl.: H02P 29/02, B67C 3/00, B65B 57/08, B67C 7/00

(54) **VERFAHREN ZUR KOLLISIONSÜBERWACHUNG**
METHOD FOR COLLISION MONITORING
PROCÉDÉ DE SURVEILLANCE DES COLLISIONS

(30) Priorität: 19.03.2015 DE 102015205039
(43) Veröffentlichungstag der Anmeldung: 24.01.2018
(73) Patentinhaber: Krones AG, 93073 Neutraubling (DE)
(72) Erfinder: KORNPROBST, Stefan, 93073 Neutraubling (DE)
(74) Vertreter: Grünecker Patent- und Rechtsanwälte PartG mbB
(86) Internationale Anmeldenummer: PCT/EP2016/053257
(87) Internationale Veröffentlichungsnummer: WO 2016/146327

(56) Entgegenhaltungen:
- EP-A2- 1 072 386
- WO-A1-96/40558
- WO-A1-2014/059322
- DE-U1- 29 724 886
- US-A- 6 064 165

## Beschreibung

Die vorliegende Erfindung betrifft ein Verfahren zur Kollisionsüberwachung eines periodisch bewegbaren, elektrisch angetriebenen Bauteils gemäß Oberbegriff des Anspruchs 1 und eine Behälterbehandlungsmaschine gemäß Oberbegriff des Anspruchs 10.

### Stand der Technik

Aus dem Stand der Technik sind Verfahren zur Überwachung der Bewegung eines Bauteils bzw. zur Steuerung der Bewegung bekannt.

So zeigt beispielsweise die EP 1 858 153 A2 ein Verfahren, bei dem der zeitliche Verlauf einer Messgröße, hier der Drehzahl, eines elektrischen Antriebs von einem Sensor an einem Lastelement erfasst wird und eine zeitliche Änderung dieser Drehzahl von einer Überwachungseinrichtung ausgewertet wird, woraufhin anhand einer Bewertung eine Erkennung dahingehend erfolgt, dass ein unzulässiger Drehschwingungslastzustand vorliegt und durch ein entsprechendes Rückkopplungssignal die Regelparameter für den Betrieb des elektrischen Antriebs geändert werden. Mit diesen Verfahren kann sichergestellt werden, dass die Bewegung des beweglichen Bauteils in dem vorgesehen Parameterbereichen erfolgt, was die Gefahr von Kollisionen reduzieren kann.

Ferner offenbart Dokument WO96/40558 A1 eine von einem Steuersystem gesteuerte, servomotorisch angetriebene Maschine, die ein Diagnosesystem zur Früherkennung des Wartungsbedarfs enthält, wodurch eine vorbeugende Wartung zur Vermeidung eines Maschinenausfalls ermöglicht wird. Das Steuersystem enthält einen Servomotor, der eine bewegliche Komponente einer Vorrichtung antreibt. Eine Steuerung ist vorgesehen, um die Bewegungen des Servomotors gemäß einem vorbestimmten Bewegungsprofil zu lenken. Die Steuerung überwacht die Drehmomentbelastung des Servomotors innerhalb eines vorbestimmten Zeitrahmens und vergleicht die überwachte Drehmomentbelastung mit einem oder mehreren vorbestimmten Betriebsdrehmomentwerten, um zu bestimmen, ob ein Betriebszustand vorliegt, der eine Wartung erfordert.

Weiterhin offenbart das Dokument EP 1 072 386 A2 eine Auswerfer-Steuereinrichtung für eine Spritzgießmaschine. Bei der Auswerfer-Steuereinrichtung für eine Spritzgießmaschine ist ein Lasterfassungsmittel zum Erfassen einer Last, die auf einen Servomotor ausgeübt wird, der die Auswerferachse antreibt, in die Steuereinrichtung eingebaut, und die Last, die auf den Servomotor zu der Zeit einer Auswerferbetätigung für jeden Gießzyklus ausgeübt wird, wird mit Hilfe des Lasterfassungsmittels erfasst. Dann werden die Lasten in Bezug auf die Zeit oder die Auswerferpositionen für eine Vielzahl von Auswerferbetätigungen vor dem gegenwärtigen Gießzyklus in einem Speichermittel gespeichert. Es sind Mittel zum Gewinnen einer Referenz-Last aus der gespeicherten Last und Mittel zum Bestimmen eines zulässigen oberen Grenzwerts aus der Referenz-Last vorgesehen, und ferner ist ein Unterscheidungsmittel vorgesehen zum Ausgeben eines Fehlersignals dann, wenn die Last zu der Zeit der gegenwärtigen Auswerferbetätigung den zuvor beschriebenen zulässigen oberen Grenzwert überschreitet.

Weiterhin ist es bekannt, bei elektrisch angetriebenen Bauteilen, die beispielsweise mittels eines Servoantriebs über eine Steuereinheit angetrieben werden, Grenzwerte für bestimmte Parameter der Bewegung, wie beispielsweise Geschwindigkeit oder Übertragung des Drehmoments oder den auf den Motor übertragenen Strom vorzusehen. Diese Grenzwerte dienen als Indikator dafür, dass eine Kollision eines bewegten Bauteils mit einem anderen Bauteil der Vorrichtung stattgefunden hat, wenn die Grenzwerte überschritten werden, was zu erheblichen Beschädigungen der gesamten Behälterbehandlungsmaschine führen könnte, wenn der Antrieb nicht unmittelbar gestoppt wird. Zu diesem Zweck ist es bekannt, bei Überschreiten des Grenzwertes den Antrieb zu stoppen, um zu verhindern, dass es zu schwerwiegenderen Beschädigungen der Maschine kommt. Ferner können diese Grenzwerte zur Überwachung der allgemeinen Funktionsfähigkeit der Maschine genutzt werden.

Jedoch erweist sich die Festlegung dieses Grenzwertes als schwierig, da es während der Bewegung des beweglichen Bauteils zu Fluktuationen mit Hinblick auf die Last des Bauteils, das übertragene Drehmoment und die Geschwindigkeit kommen kann. So kann sich die Last des Bauteils während der Bewegung verändern, beispielsweise durch Aufnahme oder Übergabe eines Behälters oder durch Reibungswiderstände, sowie gegebenenfalls durch eine Änderung des Füllstands oder allgemein des Gewichts eines transportierten Behälters. Insbesondere bei Bauteilen, die zwar periodisch bewegt werden, aber auch Phasen des Stillstands bei dieser periodischen Bewegung durchlaufen, also eine sich zeitlich ändernde Beschleunigung erfahren, ist die Definition eines solchen Grenzwertes schwierig. Bisher muss der Grenzwert daher so hoch gewählt werden, dass während der fehlerfreien Funktion der Maschine kein Fehlalarm ausgelöst wird. Andererseits muss der Grenzwert aber auch so eingestellt werden, dass eine Fehlfunktion, insbesondere eine Kollision von Bauteilen oder Behältern, möglichst unmittelbar erkannt wird, um weitere Beschädigungen zu vermeiden. Diese Anforderungen sind gegensätzlich und machen daher eine Bestimmung des Grenzwertes schwierig.

### Aufgabe

Ausgehend vom bekannten Stand der Technik ist es daher Aufgabe der vorliegenden Erfindung, ein Verfahren zur Kollisionsüberwachung anzugeben, das eine zuverlässige Bestimmung des Grenzwerts erlaubt und unbeabsichtigte Fehlalarme möglichst vermeidet.

### Lösung

Diese Aufgabe wird erfindungsgemäß durch die Verfahren zur Kollisionsüberwachung gemäß unabhängigen Ansprüchen 1 und 14 und die Behälterbehandlungsmaschinen gemäß unabhängigen Ansprüchen 10 und 15 gelöst. Vorteilhafte Weiterbildungen der Erfindung sind in den Unteransprüchen erfasst.

Das erfindungsgemäße Verfahren zu Kollisionsüberwachung ist dadurch gekennzeichnet, dass der Grenzwert der Messgröße für eine aktuelle Periode der Bewegung des Bauteils dynamisch in Abhängigkeit von der während einer vorhergehenden Periode gemessenen Messgröße bestimmt wird. Da es selbst bei normalem Betrieb ohne Kollisionen zu Veränderungen hinsichtlich des Bewegungsablaufs des beweglichen Bauteils kommen kann, die durchaus im erlaubten Bereich liegen, gestattet dieses Verfahren eine Anpassung der Grenzwerte für die entsprechende Messgröße, so dass übliche Fluktuationen nicht zu einem Fehlalarm aufgrund einer Überschreitung eines gesetzten Grenzwertes führen, obwohl überhaupt keine Kollision vorliegt. Weiterhin kann sichergestellt werden, dass Kollisionen zuverlässig erkannt werden und der Antrieb ausgeschaltet werden kann, bevor zu große Beschädigungen an der Maschine entstehen.

In einer Ausführungsform wird der Grenzwert der Messgröße für eine aktuelle Periode der Bewegung des Bauteils dynamisch in Abhängigkeit von der während der unmittelbar vorhergehenden Periode gemessenen Messgröße bestimmt. Da sich im Normalbetrieb ohne Fehlfunktion die Verläufe der Messgrößen von direkt aufeinander folgenden Perioden nur sehr geringfügig unterscheiden, kann eine Anpassung des Grenzwertes erfolgen, die diese geringfügigen Änderungen berücksichtigt und gleichzeitig das Risiko von auftretenden Fehlalarmen reduziert.

In einer weiteren Ausführungsform kann der Grenzwert der Messgröße für eine aktuelle Periode von dem Grenzwert der Messgröße für eine vorhergehende Periode um einen maximalen absoluten Wert oder einen maximalen relativen Wert verschieden sein. So können Abweichungen, die beispielsweise aufgrund der üblichen Verschleißerscheinungen während der Lebensdauer eines Bauteils und des Antriebs auftreten, implizit bei der Bestimmung des Grenzwertes mit berücksichtigt werden.

In einer besonderen Weiterbildung dieser Ausführungsform ist vorgesehen, dass der maximale absolute Wert und/oder der maximale relative Wert in Abhängigkeit einer Betriebsdauer der Behälterbehandlungsmaschine und/oder in Abhängigkeit des Alters des Bauteils und/oder in Abhängigkeit des Alters des das Bauteil antreibenden Motors bestimmt wird. So kann beispielsweise über die Bestimmung eines Gradienten für die Änderung der Grenzwerte über einen langen Zeitraum ermittelt werden, inwieweit der Verschleiß einer Maschine oder eines Bauteils zur Veränderung des Grenzwertes beiträgt und eine entsprechende Korrektur für künftige Grenzwerte bei der Bestimmung dieser berücksichtigt werden.

Es kann ferner vorgesehen sein, dass der Grenzwert eine über die gesamte Periodendauer nicht konstante Funktion ist oder über die Periodendauer konstant ist. Bei beweglichen Bauteilen, die beispielsweise eine Rotation mit über die Dauer der Periode nicht konstanter Rotationsgeschwindigkeit durchlaufen, kann ein nicht konstanter Grenzwert verwendet werden, um Fehlalarme zu vermeiden.

Weiterhin kann das Verfahren umfassen, dass die Messgröße wenigstens eines von einem auf das Bauteil übertragenen Drehmoment, einem Schleppfehler des Antriebs, dem Motorstrom oder einem Lastmoment ist. Diese Größen sind für die Bewegung des Bauteils indikativ und können sehr genau bestimmt werden, was die Bestimmung des Grenzwertes mit großer Genauigkeit zulässt.

Wird festgestellt, dass eine Differenz aus einem Grenzwert der aktuellen Periode der Bewegung des Bauteils und dem Grenzwert der vorangegangenen Periode der Bewegung des Bauteils für eine Anzahl von aufeinanderfolgenden Perioden stets dasselbe Vorzeichen hat, so kann vorgesehen sein, dass zur Bestimmung des Grenzwertes der Messgröße weiterhin Zustandswerte des Antriebs in Echtzeit erfasst und berücksichtigt werden. Anwachsende Abweichungen, die stets in dieselbe Richtung zeigen (gleiches Vorzeichen) deuten darauf hin, dass die Maschine beispielsweise aufgrund ihrer Lebensdauer und dem damit einhergehenden Verschleiß ein Veränderung des Bewegungsprofils des beweglichen Bauteils erfährt. Durch eine entsprechende Korrektur unter Berücksichtigung der Zustandswerte, wie beispielsweise dem Alter der Behälterbehandlungsmaschine, kann dieser Fehler bei der Berechnung des Grenzwertes berücksichtigt werden.

Dabei kann vorgesehen sein, dass aus der Berücksichtigung der Zustandswerte des Antriebs ein zeitlich abhängiger Korrekturwert abgeleitet wird, der dasselbe Vorzeichen hat und zum Berechnen Grenzwert für eine aktuelle Periode dazu addiert wird. Durch diesen Korrekturwert kann der Veränderung dieser Zustandswerte Rechnung getragen und Fehlalarme effektiver vermieden werden.

In einer Ausführungsform des Verfahrens ist vorgesehen, dass zusätzlich zum Grenzwert bei der Erkennung einer Kollision Betriebszustände umfassend wenigstens eines von einer Beschleunigung des Bauteils, Leerlauf oder Produktion berücksichtigt werden. Wird zum Beispiel der Grenzwert für den Betrieb der Behälterbehandlungsmaschine unter Volllast bestimmt, so kann dieser Grenzwert für eine Beschleunigung oder Anfahrphase des Bauteils bzw. der Bewegung des Bauteils oder für einen Leerlauf der Behälterbehandlungsmaschine nicht repräsentativ sein, weshalb diese Betriebszustände gesondert berücksichtigt werden müssen, um auch hier Fehlalarme beispielsweise bei Testläufen zu vermeiden.

Erfindungsgemäß wird eine Behälterbehandlungsmaschine bereitgestellt, die ausgebildet ist, ein Verfahren zur Kollisionsüberwachung gemäß einer der obigen Ausführungsform durchzuführen.

Die Behälterbehandlungsmaschine kann dabei wenigstens eines von Sensoren zum Erfassen der Position des Bauteils, Sensoren zum Erfassen der Beschleunigung des Bauteils, Sensoren zum Erfassen von Temperaturwerten, die indikativ für die Funktion des Antriebs sind, und Sensoren zum Erfassen der Last des Bauteils umfassen.

Weiterhin kann vorgesehen sein, dass der Steuereinheit ein nichtflüchtiger Speicher zugeordnet ist, in dem berechnete Grenzwerte gespeichert werden können und von der Steuereinheit zur weiteren Verwendung wieder aufgerufen werden können.

In einer Weiterbildung dieser Ausführungsform ist vorgesehen, dass in dem nichtflüchtigen Speicher weiterhin Betriebsparameter, die für die Berechnung der Grenzwerte benutzt werden können, gespeichert und von der Steuereinheit wieder aufgerufen werden können. So können nicht nur für die Berechnung Grenzwerte miteinander verglichen werden, um beispielsweise zu erkennen, dass eine Korrektur der Grenzwerte aufgrund von Verschleiß von Teilen der Behälterbehandlungsmaschine notwendig ist, sondern es können auch Unregelmäßigkeiten in den Betriebsparametern selbst festgestellt werden, die für die Berechnung des Grenzwertes hilfreich sein können.

Erfindungsgemäß ist weiterhin ein alternatives Verfahren zur Kollisionsüberwachung eines in einer Behälterbehandlungsmaschine transportierten Behälters mit einem Bauteil oder mit einem anderen, in der Behälterbehandlungsmaschine transportierten Behälter vorgesehen, wobei ein Grenzwert einer Messgröße, die indikativ für eine Kollision des Behälters mit dem Bauteil oder dem anderen Behälter ist, festgelegt wird, bei dessen Überschreitung der Betrieb der Behälterbehandlungsmaschine angehalten wird, dadurch gekennzeichnet, dass der Grenzwert der Messgröße für die Bewegung des aktuellen Behälters durch die Behälterbehandlungsmaschine dynamisch in Abhängigkeit von der während eines vorangegangen, durch die Behälterbehandlungsmaschine transportierten Behälters gemessenen Messgröße bestimmt wird. So kann beispielsweise eines Kollision eines nicht korrekt transportierten Behälters rechtzeitig detektiert und die Maschine angehalten werden, um Kollisionen zu vermeiden.

Weiterhin wird eine Behälterbehandlungsmaschine zum Behandeln von Behältern, wie beispielsweise Flaschen angegeben, die ausgebildet ist, ein Verfahren zur Kollisionsüberwachung gemäß der letztgenannten Ausführungsform durchzuführen.

### Kurze Beschreibung der Figuren

- Figur 1: Schematische Darstellung einer zur Durchführung des erfindungsgemäßen Verfahrens ausgebildeten Behälterbehandlungsmaschine
- Figur 2a und b: Schematische Darstellung des Verlaufs von Kurven von Messgrößen und Grenzwerten über eine Periode der Bewegung
- Figur 3a bis c: Schematische Darstellung berechneter Grenzwerte und dazugehöriger Messgrößen gemäß verschiedener Ausführungsformen
- Figur 4: Schematische Darstellung des Verlaufs der Messgröße der Bewegung des Bauteils bei Fehlfunktion

### Ausführliche Beschreibung

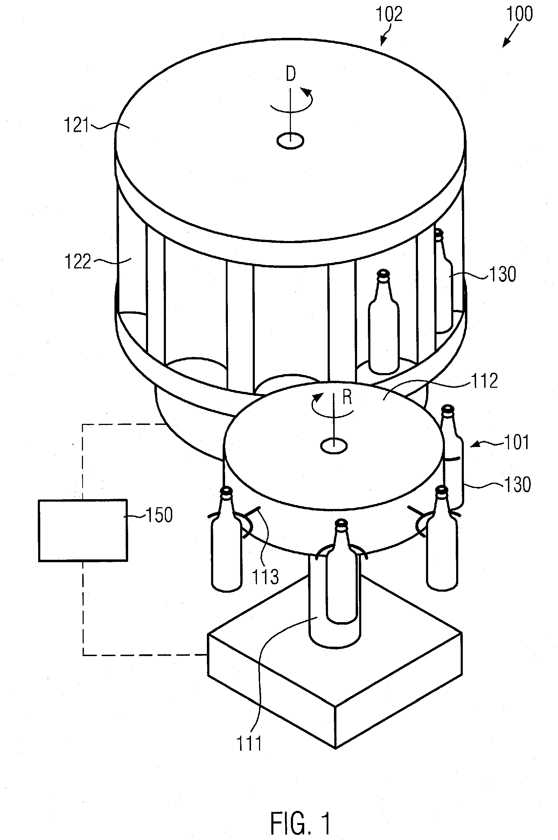

Figur 1 zeigt schematisch eine Behälterbehandlungsmaschine 100, für die das erfindungsgemäße Verfahren zur Kollisionskontrolle Anwendung finden kann. Die Behälterbehandlungsmaschine 100 kann eine Zuführeinrichtungen 101 umfassen, die hier als Drehstern 112 ausgebildet ist. Dieser umfasst eine oder mehrere Greifeinrichtungen 113, mit der er Behälter 130 aufnehmen kann und an eine Behandlungsmaschine 102 mit einem Karussell, auf dem mehrere Behandlungstationen 122 angeordnet sind, übergeben kann. Der Drehstern rotiert um eine Rotationsachse R und das Karussell 121 um eine Rotationsachse D. Dabei werden sowohl das Karussell als auch der Drehstern über Antriebe angetrieben. Diese sind hier nicht dargestellt, jedoch ist der Antrieb des Drehsterns 112 schematisch über die Welle 111 angedeutet.

Die Behälterbehandlungsmaschine umfasst somit wenigstens zwei bewegliche Bauteile im Sinne der Erfindung, nämlich Drehstern 112 und Karussell 121. Erfindungsgemäß kann auch vorgesehen sein, dass nur ein bewegliches Bauteil vorhanden ist. Grundsätzlich ist das Verfahren gemäß der Erfindung für Maschinen vorgesehen, bei denen es aufgrund einer Fehlfunktion des beweglichen Bauteils zu einer Kollision des Bauteils mit einem anderen Bauteil kommen kann. Die Behälterbehandlungsmaschine 100 muss daher nicht so ausgebildet sein, wie dies hier angedeutet ist, sondern kann auch anders realisiert werden.

Während in der folgenden Beschreibung Bezug auf die Kollision zweier Bauteile genommen wird, kann es sich auch um Behälter handeln, die mit Bauteilen oder anderen Behältern kollidieren und so zu Beschädigungen führen können. So kann beispielsweise ein nicht korrekt gegriffener Behälter in einem Greiferzylinder mit einem unbeweglichen oder beweglichen Maschinenteil kollidieren.

Ebenso kann ein bewegliches Bauteil mit einem relativ zur Maschine feststehenden Behälter kollidieren, weil bei der Bewegung des Bauteils ein Fehler auftritt. Die Ausführungen hinsichtlich der Kollision eines beweglichen Bauteils mit einem anderen Bauteil der Maschine treffen daher in gleichem Maße auch auf die Kollision des beweglichen Bauteils mit einem unbeweglichen oder beweglichen Behälter in der Maschine zu.

Für die Überwachung des Betriebszustandes oder bestimmter Betriebsparameter oder von Messgrößen, die indikativ für die Bewegung der beweglichen Bauteile sind, kann eine Vielzahl von Sensoren vorgesehen sein. So können ein oder mehrere Sensoren zum Erfassen der Position oder der Beschleunigung beweglicher Bauteile während ihrer Bewegung, sowie Sensoren zum Erfassen von Temperaturwerten, insbesondere Temperaturwerten der Antriebe oder von Schmiermitteln sowie der Temperatur von Lagern, in denen bewegliche Teile gelagert sind, vorgesehen sein.

Alternativ kann die Bewegung eines in der Behälterbehandlungsmaschine transportierten Behälters überwacht werden, indem Sensoren seine Position erfassen und seine Bewegung überwachen.

Das erfindungsgemäße Verfahren ist insbesondere bei Servoantrieben von Vorteil, da hier zwischen der Bewegung der einzelnen beweglichen Bauteile (beispielsweise Drehstern 112 und Karussell 121) keine direkte mechanische Kopplung besteht, so dass die Steuerung der Bewegungsabläufe relativ zueinander elektronisch über eine Steuereinheit 150 reguliert werden muss. Jedoch können hier auch andere Antriebe, insbesondere jegliche Form elektrischer Antriebe verwendet werden.

Bei der in Figur 1 dargestellten Behälterbehandlungsmaschine 100 kann es aufgrund fehlerhafter Abstimmung der Bewegung des Drehsterns 112 und des Karussells 121 zu Kollisionen beispielsweise der Greifeinrichtungen 113 mit Bereichen des Karussells kommen, in denen keine Behandlungstationen angeordnet sind. Zu solchen Kollisionen kann es aus unterschiedlichen Gründen kommen. Beispielsweise kann ein Ausfall des Antriebs oder eine Fehlfunktion vorliegen, sodass das auf das bewegliche Bauteil übertragenen Drehmoment nicht dem vorgesehenen entspricht, sodass es entweder zu einen Verzug oder einem Vorlauf des beweglichen Bauteils (Drehstern oder Karussell) relativ zum anderen Bauteil kommt und es somit zu einer Kollision kommt. Weiterhin kann beispielsweise durch physische Beeinflussung eines der beweglichen Bauteile (ein loses Teil fällt in den Antrieb des Drehsterns oder Karussells oder Ähnliches) zu einer Fehlfunktion kommen, die letztlich zu einer Kollision führt. Hier sind auch alle anderen Einflüsse umfasst, die die Bewegung eines der beweglichen Bauteile oder des beweglichen Bauteils der Art beeinflussen, dass sie nicht wie vorgesehen abläuft und es aufgrund dieser Beeinflussung zu einer Kollision mit einem anderen Bauteil kommt.

Die Steuerung der Bewegung des Drehsterns 112 einerseits und des Karussells 121 andererseits über die Steuereinheit 150 erfolgt über Regelung des den elektrischen Antrieben beziehungsweise Motoren zugeführten Stroms. Dadurch wird das durch die Motoren auf beispielsweise die Welle 111 und damit den Drehstern 112 übertragene Drehmoment eingestellt.

Das Drehmoment kann während eines Umlauf bzw. einer Periode des beweglichen Bauteils (beispielsweise Drehstern 112 oder Karussell 121) schwanken. Insbesondere beim Anfahren eines beweglichen Bauteils kann ein deutlich größeres Drehmoment notwendig sein, als beim Bewegen des Bauteils mit konstanter Geschwindigkeit. Um Kollisionen rechtzeitig zu erkennen werden Grenzwerte für, für die Bewegung indikative Messgrößen, wie beispielsweise das auf den Drehstern 112 übertragene Drehmoment festgelegt bzw. bestimmt. Die grundsätzliche Festlegung von Grenzwerten ist aus dem Stand der Technik bereits bekannt. Somit wird die Erkennung der Kollision auf das Feststellen des Überschreitens des Grenzwertes der Messgröße verschoben. Übersteigt die Messgröße, also etwa das auf den Drehstern 112 übertragenen Drehmoment, diesen Grenzwert, so wertet die Steuereinheit dies als Indiz dafür, dass es zu einer mechanischen Kollision zwischen dem Drehstern und dem Karussell gekommen ist. Jedoch erweist es sich aufgrund der ohnehin vorhandenen Schwankungen einer entsprechenden Messgröße beispielsweise durch das Anfahren oder während der normalen Bewegungsabläufe als schwierig, diesen Grenzwert so festzulegen, dass Fehlalarme vermieden werden aber Kollisionen möglichst immer erkannt werden.

Daher ist erfindungsgemäß vorgesehen, dass der Grenzwert für jede Periode der Bewegung des beweglichen Bauteils neu bestimmt wird. Dazu wird der Grenzwert für die aktuelle Periode der Bewegung des beweglichen Bauteils basierend auf der gemessenen Messgröße bei der Bewegung des beweglichen Bauteils während einer vorangegangenen Periode bestimmt. Fand in einer vorangegangenen Periode keine Kollision beweglicher Bauteile, also keine Überschreitung des vorherigen Grenzwertes, statt, so kann davon ausgegangen werden, dass die gemessenen Werte für die Messgröße (beispielsweise Drehmoment) während der Bewegung des beweglichen Bauteils (beispielsweise Drehstern 112) während der entsprechenden Periode der normalen Funktion bzw. des Bewegungsablaufs des beweglichen Bauteils entsprechen. Für die kommende Periode der Bewegung des Bauteils (beispielsweise die nächste Drehung des Drehsterns 112) wird dieser Verlauf der Messgröße benutzt, um den neuen Grenzwert zu bestimmen, der die maximale akzeptable Abweichung der Messgröße während der nächsten Periode angibt. Bis zu diesem Grenzwert kann der tatsächliche Verlauf der Messgröße bzw. damit einhergehend die tatsächliche Bewegung des beweglichen Bauteils in der nächsten Periode als kollisionsfrei angesehen werden. Es ist natürlich auch denkbar, dass der Grenzwert nicht nur basierend auf der unmittelbar vorangegangenen Periode der Bewegung des beweglichen Bauteils bestimmt wird, sondern dass eine Vielzahl von vorangegangenen Perioden und die entsprechend für die Bewegung des beweglichen Bauteils indikativen Messwerte berücksichtigt werden, um den Grenzwert für die aktuelle Periode zu bestimmen.

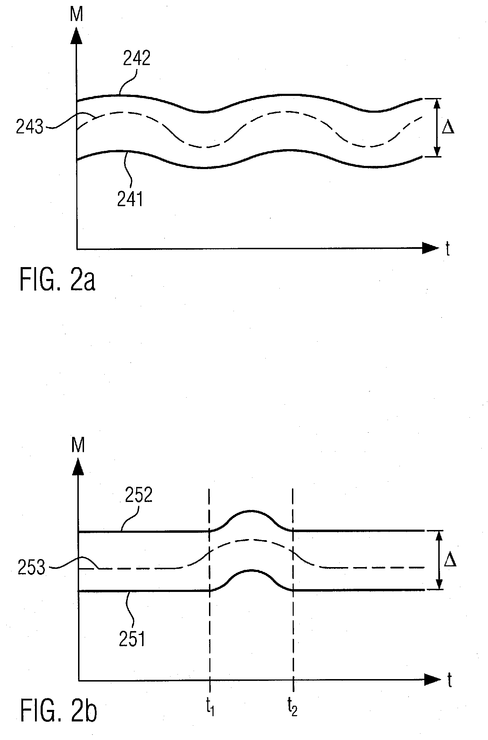

Dazu zeigen Figur 2a und 2b zwei mögliche Verläufe von Messgrößen einer vorangegangenen Periode und dem daraus berechneten Grenzwert für die folgende Periode der Bewegung des beweglichen Bauteils.

In Figuren 2a und 2b ist als Messgröße das Drehmoment, das auf das bewegliche Bauteil übertragen wird, angesetzt. Natürlich sind auch andere Messgrößen denkbar, wie beispielsweise die Beschleunigung, die das bewegliche Bauteil erfährt, oder ein messbarer Schleppfehler des Antriebs, der aufgrund der Trägheit des beweglichen Bauteils entsteht, oder ein Lastmoment, aber auch der dem Motor zugeführte Strom. Die in Figur 2a dargestellte Kurve 241 entspricht dem während einer vorangegangenen Periode gemessenen Drehmoment, das auf das bewegliche Bauteil einwirkt. Für die folgenden Erläuterungen wird davon ausgegangen, dass dieser Verlauf der Messgrößen unterhalb eines für die vorangegangene Periode charakteristischen Grenzwertes lag und somit keine Kollision festgestellt wurde. Aus diesen Werten der Kurve 241 wird dann ein Grenzwert 242 berechnet, der als Grenzwert für die nächste Periode der Bewegung des beweglichen Bauteils verwendet wird. Dieser Grenzwert ist um einen Wert Δ von der gemessenen Messgröße 241 zu jeder Zeit verschieden. So kann dem sich verändernden Verhalten der Bewegung des beweglichen Bauteils Rechnung getragen werden. Verändert sich beispielsweise das auf das bewegliche Bauteil übertragen Drehmoment aufgrund von Verschleiß der Bauteile, so wird der Verlauf des Drehmoment einer nächsten Periode von dem Verlauf 241 verschieden sein, beispielsweise dem Verlauf 243 ähneln. Obwohl keine Kollision stattfindet, gibt es Abweichungen zum vorherigen Verlauf der Messgröße. Diesem Umstand wird durch die Bestimmung des Grenzwertes 242 als von dem Verlauf der Messgröße 241 während der vorangegangenen Periode um den Wert Δ abweichend Rechnung getragen. Solang für die nächste Periode, für die der Grenzwert 242 verwendet wird, das auf das bewegliche Bauteil übertragen Drehmoment einem zeitlichen Verlauf entspricht, der unter dem Grenzwert 242 verläuft, interpretiert die Steuereinheit 150 dies als ordnungsgemäße Funktion und nicht als Kollision von beweglichen Bauteilen, sodass kein Fehlalarm ausgelöst und gegebenenfalls die Behälterbehandlungsmaschine gestoppt wird.

Dies bietet gegenüber einem für alle Zeiten festgeschrieben Grenzwert den Vorteil, dass Veränderungen im auf das bewegliche Bauteil übertragenen Drehmoment, die den korrekten Bewegungsablauf des beweglichen Bauteils nicht beeinflussen bzw. nicht in der Art beeinflussen, dass es zu einer Kollision kommt, berücksichtigt werden und keine Fehlalarme ausgelöst jedoch gleichzeitig eine Überschreitung des Grenzwerts, die mit hoher Wahrscheinlichkeit indikativ für eine Kollision sein könnte, erkannt wird und die Maschine angehalten wird.

Figur 2b zeigt einen alternativen Verlauf 251 der Messgröße einer vorangegangenen Periode der Bewegung des beweglichen Bauteils und den daraus abgeleiteten Grenzwert 252 für die folgende Periode. Im Gegensatz zum Verlauf der Messgröße über eine Periode gemäß Figur 2a (Kurve 241) erfolgt die normale Bewegung des beweglichen Bauteils gemäß Figur 2b so, dass das Drehmoment über die gesamte Periodendauer im Wesentlichen konstant ist, aber im Bereich t₁ bis t₂ erheblich schwankt. Bei einem starren Grenzwert könnte eine solche Schwankung, die für die Bewegung des beweglichen Bauteils tatsächlich normal ist, zu einem Fehlalarm führen und ein Stillstand der Maschine hervorgerufen werden. Erfindungsgemäß wird jedoch der Grenzwert 252 für die darauffolgende Periode der Bewegung des beweglichen Bauteils so bestimmt, dass diese Schwankung ausgeglichen werden kann. So löst selbst der Verlauf der Messgröße bzw. des Drehmoments 253 der nächsten Periode hier keinen Fehlalarm aus, obwohl sie von dem Verlauf des Drehmoments der vorangegangenen Periode 251 verschieden ist.

Der in Figur 2a und 2b beschriebene Ablauf zur Bestimmung des Grenzwertes ist insbesondere dann von Vorteil, wenn die Veränderung der Messgröße aufgrund des fortschreitenden Alters der Behälterbehandlungsmaschine zunimmt, beispielsweise durch Verschleiß. Während kurzzeitige Veränderungen, also Veränderungen von einer Periode auf die nächste Periode, verhältnismäßig gering sind und deutlich weniger als ein Prozent des Wertes der Messgröße betragen, kann es über Tausende von Perioden der Bewegung des beweglichen Bauteils beim Betrieb über Jahre zu Abweichungen kommen, die merklich sind, aber dennoch keine Kollision nach sich ziehen. So kann beispielsweise nach mehreren Jahren des Betriebs der Behälterbehandlungsmaschine eine Abweichung von dem Verlauf der Messgröße einer aktuellen Periode gegenüber der ersten, bei Inbetriebnahme der Behälterbehandlungsmaschine ausgeführten Periode um mehrere Prozent erfolgen. Bei einem starren Grenzwert würde eine solche Abweichung unweigerlich zu einem Fehlalarm führen, es sei denn der Grenzwert ist so hoch bzw. als so verschieden von dem Verlauf der Messgröße bei Inbetriebnahme angesetzt, dass selbst erhebliche Schwankungen den Grenzwert nicht überschreiten. Damit können jedoch tatsächlich auftretende Kollisionen eventuell nicht rechtzeitig erkannt werden.

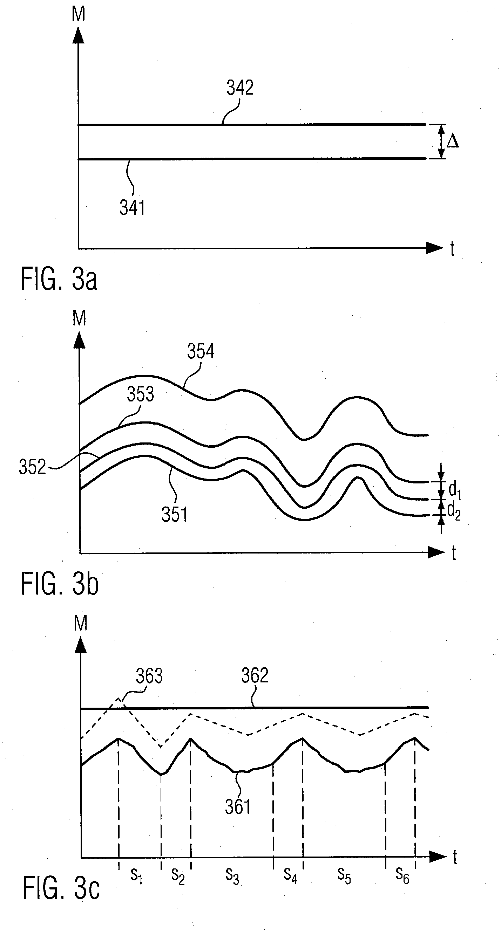

Daher ist erfindungsgemäß vorgesehen, dass bei der Bestimmung des Grenzwerts auch Veränderungen des Verlaufs der Messgröße über einen sehr langen Zeitraum berücksichtigt werden. Dazu zeigt Figur 3 weitere Ausführungsform zur Bestimmung eines Grenzwerts basierend auf der gemessenen Messgröße einer vorangegangenen Periode der Bewegung des beweglichen Bauteils.

In Figur 3a ist dabei ein Verlauf der Messgröße 341 einer vorangegangenen Periode als konstante Funktion dargestellt. Die hier beispielhaft verwendete Messgröße ist erneut das Drehmoment, das bei der Bewegung zeitlich konstant ist. Daraus kann ein Grenzwert 342 ermittelt werden, der um den Wert Δ von dem Verlauf der Messgröße 341 verschieden ist und der auch geringfügige Schwankungen beim Verlauf der Messgröße und damit der Bewegung des beweglichen Bauteils während der aktuellen Periode zulässt.

In Figur 3b sind die Verläufe der Messgrößen mehrere Perioden dargestellt. Diese Kurven 351 bis 353 repräsentieren hier anschaulich die Veränderung des Verlaufs der Messgröße aufgrund von Verschleißerscheinungen. So kann beispielsweise die Kurve 351 dem Verlauf der Messgröße bei Inbetriebnahme der Behälterbehandlungsmaschine entsprechen. Die Kurve 352 kann dem Verlauf nach einem Jahr Betrieb entsprechen und die Kurve 353 dem Verlauf nach zwei Jahren Betrieb. Die Kurve 352 ist von der Kurve 351 durchschnittlich um den Wert d₂ beabstandet und die Kurve 353 ist von der Kurve 352 um den Wert d₁ beabstandet. Dabei sind die Differenzen zwischen der Kurve 352 und 351 sowie 353 und 352 beide positiv, haben also dasselbe Vorzeichen und entsprechen Veränderungen "in dieselbe Richtung". Eine solche Veränderung des Verlaufs der Messgröße über die Zeit ist charakteristisch für Verschleißerscheinungen.

Dem kann Rechnung getragen werden, indem der Grenzwert 354 für eine der Kurve 353 nachfolgende Periode der Bewegung des beweglichen Bauteils nicht, wie in Figuren 2a und 2b beschrieben, ausschließlich basierend auf dem letzten oder einem vorangegangenen Verlauf der Messgröße bestimmt wird, sondern auch ein Korrekturwert berücksichtigt wird, der dem Verschleiß der Maschine Rechnung trägt. Auch dieser Korrekturwert kann immer wieder von neuem berechnet werden und für jede Periode neu bestimmt werden. Jedoch kann auch vorgesehen sein, dass dieser Korrekturwert so bestimmt wird, dass er für wenigstens eine bestimmte Anzahl von folgenden Perioden der Bewegung des beweglichen Bauteils verwendet wird. Er wird dann groß genug angesetzt, um die Veränderungen des Verlaufs der Messgröße über mehrere Perioden zu berücksichtigen, aber weiterhin gering genug angesetzt, um mögliche Kollisionen sicher und zweifelsfrei erkennen zu können. Weiterhin kann dieser Korrekturwert auch so bestimmt sein, dass der Grenzwert für die nächste Periode von dem Verlauf der vorangegangenen Periode der Messgröße nicht nur um einen konstanten Wert abweicht, sondern dass der Verlauf des Grenzwertes insgesamt ein anderer ist, insbesondere " auseinanderfließt", d.h. also, dass bei Inbetriebnahme scharf Veränderungen der Messgröße (beispielsweise des Drehmoments) mit der Zeit immer weniger scharf verlaufen, also für eine entsprechende Änderung des Drehmoments mehr Zeit benötigt wird. Dies kann durch die Bestimmung des Verlaufs des Grenzwertes berücksichtigt werden.

Alternativ kann hier auch vorgesehen sein, dass der Verschleiß der Maschine durch Auswertung mehrerer Perioden der Bewegung des beweglichen Bauteils berücksichtigt wird. So kann ein Gradient gebildet werden, auf dessen Grundlage dann ermittelt werden kann, ob die Änderung des Grenzwertes auf Verschleiß zurückzuführen ist. Ist dies der Fall, kann vorgesehen sein dass bei der Berechnung der Grenzwerte ein weiterer Korrekturterm berücksichtigt wird, der dem Verschleiß Rechnung trägt.

Weiterhin kann vorgesehen sein, dass der Grenzwert adaptiv bestimmt wird, wie dies in Figur 3c dargestellt ist. Dabei ist unter adaptiv zu verstehen, dass bei Verläufen der Messgröße, wie dem Verlauf 361, der starke Schwankungen über eine Periode der Bewegung des beweglichen Bauteils aufweist, ein Grenzwert festgelegt wird, der diesem Verlauf nicht notwendig folgt, sondern beispielsweise als konstanter Wert festgelegt wird, wie er mit dem Graphen 362 dargestellt ist, oder mittels einer gemittelten Funktion über den Verlauf der Messgröße während der vorangegangenen Periode beschrieben wird. Beispielsweise kann zur Berechnung des Grenzwerts der Verlauf der Messgröße 361 in mehrere Abschnitte s₁ bis s₆ zerlegt werden. In diesen Abschnitten kann der Grenzwert als lineare Näherung des Verlaufs der Messgröße 361 bestimmt werden und über einen Versatz als Grenzwert für die nächste Periode der Bewegung verwendet werden, wie dies mit der Kurve 363 dargestellt ist. Auch andere Näherungen, beispielsweise eine quadratische Näherung oder eine Näherung basierend auf einer endlichen Taylor-Reihe (wobei entsprechend der gewünschten Genauigkeit N Glieder verwendet werden), sind hier denkbar.

Grundsätzlich ist vorgesehen, dass sich der Grenzwert für eine folgende Periode der Bewegung des beweglichen Bauteils von der Messgröße bzw. von dem Verlauf der Messgröße einer vorangegangenen Periode der Bewegung des beweglichen Bauteils um einen konstanten Wert oder um einen prozentualen Wert unterscheidet. Ersteres bedeutet, dass für jeden Zeitpunkt der nächsten Periode, für die der Grenzwert bestimmt wird, sich der Grenzwert um einen konstanten Wert Δ vom ursprünglichen Wert der Messgröße zu dieser Zeit entlang des Verlaufs der Messgröße der vorangegangenen Periode unterscheidet. In einem solchen Fall gilt, dass g(t)=f(t)+Δ (1) ist, wobei g(t) die Funktion ist, die den Verlauf des Grenzwerts beschreibt und f(t) die Funktion ist, die den Verlauf der Messgröße während einer vorangegangenen Periode der Bewegung des beweglichen Bauteils beschreibt. Letzteres hingegen bedeutet, dass für den Verlauf des Grenzwertes gilt g(t)=f(t)+af(t) (2), wobei α ∈ (0;1) ist. Auch Mischformen sind denkbar, wobei beispielsweise der Wert Δ zeitabhängig gewählt wird, aber unabhängig von f(t). Weiterhin kann vorgesehen sein, dass im Beispiel von Figur 2b der Grenzwert für Bereiche des Verlaufs der Messgröße 251, in denen die Messgröße annähernd konstant ist, über Gleichung (1) bestimmt wird und für den Bereich zwischen den Zeiten t₁ und t₂ der Verlauf über Gleichung (2) bestimmt wird.

Ebenso kann der mit Verweis auf Figur 3n beschriebene Korrekturwert entweder als konstanter Wert oder als zeitlich veränderlicher Wert oder als prozentualer Wert in Abhängigkeit des Verlaufs der Messgröße während einer vorangegangenen Periode der Bewegung des beweglichen Bauteils bestimmt werden.

Die in den Figuren 2 und 3 dargestellten Grenzwerte lagen sämtlich oberhalb des Verlaufs der Messgrößen aus vorangegangenen Perioden der Bewegung des beweglichen Bauteils. Es versteht sich jedoch, dass auch zwei Grenzwerte bestimmt werden können, die dann als Einhüllende des Verlaufs der Messgröße einer vorangegangenen Periode oder mehrerer vorangegangenen Perioden bestimmt werden. Somit kann ein unterer Grenzwert für den Verlauf der Messgröße angegeben werden, bei dessen Unterschreitung davon ausgegangen wird, dass eine Kollision oder eine andere Fehlfunktion vorliegt. Verläuft die Messgröße während einer aktuellen Periode dann im durch die Einhüllende bestimmten Bereich, so kann die Steuereinheit dies als ordnungsgemäße Funktion bzw. Bewegung des beweglichen Bauteils werten.

Entsprechend kann alternativ zu einem oberhalb des Verlaufs der Messgröße einer vorangegangenen Periode liegenden Grenzwert auch ausschließlich ein unter dem Verlauf der Messgröße der vorangegangenen Periode liegender Grenzwert ermittelt werden. Dies kann auf dieselbe Art und Weise erfolgen, wie dies mit Verweis auf Figuren 2a und 2b, sowie Figuren 3a-3c der Fall war.

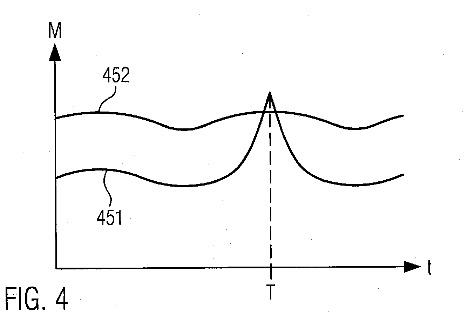

Schließlich zeigt Figur 4 den Fall, bei dem aus dem Verlauf der Messgröße einer vorangegangenen Periode der Bewegung des beweglichen Bauteils ein Grenzwert 452 abgeleitet wurde. Der Verlauf der Messgröße der aktuellen Periode der Bewegung des beweglichen Bauteils ist mit 451 dargestellt. Zum Zeitpunkt T übersteigt die Messgröße, hier das Drehmoment M, das auf das bewegliche Bauteil übertragen wurde, den Grenzwert 452 und wird somit von der Steuereinheit als Kollision oder zumindest Fehlfunktion der Behälterbehandlungsmaschine erkannt, woraufhin der Antrieb des beweglichen Bauteils, wie beispielsweise dem Karussell oder dem Drehstern, wie sie in Figur 1 dargestellt wurden, gestoppt werden kann, um größere Schäden an der Behälterbehandlungsmaschine zu verhindern.

Um für die Bestimmung der Grenzwerte einen sinnvollen Ausgangswert zu erzeugen, kann vorgesehen sein, dass bei Inbetriebnahme und unter kontrollierten Bedingungen eine erste Periode der Bewegung des beweglichen Bauteils oder mehrere Perioden der Bewegung des beweglichen Bauteils durchgeführt werden, um einen Referenzwert zu erzeugen, der als Ausgangswert für die Bestimmung der Grenzwerte bzw. als Referenz für eine funktionierende Bewegung des beweglichen Bauteils während einer Periode dienen kann. Folgende Grenzwerte können dann iterativ aus dem so ermittelten Referenzwert und dem Verlauf der Messgröße während folgender Perioden der Bewegung des beweglichen Bauteils ermittelt werden.

So kann, falls mehrere Perioden der Bewegung des beweglichen Bauteils durchlaufen werden, ein Mittelwert bestimmt werden, der als Referenz für den normalen Betrieb des beweglichen Bauteils ohne Kollision interpretiert wird. Die Berechnung von Grenzwerten für nachfolgende Perioden der Bewegung des beweglichen Bauteils kann dann basierend auf vorangegangenen Perioden des beweglichen Bauteils, auch unter Berücksichtigung des Referenzwerts, iterativ erfolgen.

Zur Speicherung des Referenzwerts kann der Steuereinheit ein nichtflüchtiger Speicher zugeordnet sein, auf den die Steuereinheit zugreifen kann, um beispielsweise den Referenzwert abzurufen. Alternativ kann in einer Ausführungsform auch vorgesehen sein, dass in dem nichtflüchtigen Speicher Grenzwerte von vorangegangenen Perioden der Bewegung des beweglichen Bauteils gespeichert werden, um auch als Referenz für die Bestimmung des aktuellen Grenzwertes zu dienen und um zu überprüfen, ob die Grenzwerte stark schwanken, um etwa Statistiken über den Betrieb der Behälterbehandlungsmaschine zu erstellen. Alternativ oder zusätzlich dazu kann auch vorgesehen sein, dass die Betriebsparameter, wie beispielsweise die gemessenen Messgrößen während der verschiedenen Perioden der Bewegung des beweglichen Bauteils in dem nichtflüchtigen Speicher gespeichert werden, sodass auch der Verlauf von Messgrößen von einer Vielzahl von Perioden der Bewegung des beweglichen Bauteils zur Bestimmung des Grenzwertes für eine aktuelle Periode eines beweglichen Bauteils verwendet werden können.

Während hier beispielshaft nur ein Grenzwert für nur eine Messgröße des beweglichen Bauteils bestimmt wurde, kann vorgesehen sein, dass mehrere Grenzwerte für unterschiedliche Messgrößen, die indikativ für die Bewegung des beweglichen Bauteils sind, bestimmt werden. So kann nicht nur für das Drehmoment, sondern auch für die auf den Antrieb wirkende Last ein Grenzwert bestimmt werden. Da sich Fehlfunktionen nicht notwendig unmittelbar in der Überschreitung des Grenzwerts nur einer Messgröße zeigen, kann die Überwachung des Verhaltens mehrerer Messgrößen und die Bestimmung von Grenzwerten für jede dieser Messgrößen in vorteilhafter Weise genutzt werden, um Kollisionen des beweglichen Bauteils mit anderen Bauteilen, aber auch andere Fehlfunktionen des beweglichen Bauteils zu erkennen.

Die in den Figuren 2 bis 4 beschriebenen Ausführungsformen zur Bestimmung des Grenzwertes bei der Bewegung des beweglichen Bauteils können auch auf die Bestimmung eines Grenzwertes für die Bewegung eines in der Behälterbehandlungsmaschine transportierten Behälters verwendet werden, wobei dann entsprechende Sensoren zur Bestimmung von Messgrößen, die indikativ für die Bewegung dieses Behälters sind, vorgesehen sind. Bei einem durch die Behälterbehandlungsmaschine transportierten Behälter findet jedoch keine periodische Bewegung statt, so dass die entsprechenden Grenzwerte nicht basierend auf einer vorangegangenen Periode einer Bewegung des Behälters bestimmt werden können. Jedoch findet der Transport der durch die Behälterbehandlungsmaschine transportierten Behälter im Wesentlichen immer unter nahezu identischen Bedingungen (Geschwindigkeitsprofil, Beschleunigung, etwaige Drehmomente, die auf den Behälter wirken) statt. Somit können die Messgrößen, die bei der Bewegung eines vorangegangenen Behälters durch die Behälter Warnung Maschine gemessen wurden (beispielsweise Position des Behälters oder Geschwindigkeitsprofil) als indikativ für den Transport eines aktuellen Behälters durch die Behälterbehandlungsmaschine angesehen werden. Daher wird erfindungsgemäß zur Überwachung möglicher Kollisionen eines durch die Behälterbehandlungsmaschine transportierten Behälters mit Bauteilen oder mit anderen Behältern ein Grenzwert für eine Messgröße, die indikativ für die Bewegung des Behälters durch die Behälterbehandlungsmaschine ist, basierend auf den gemessenen Messgrößen für die Bewegung eines vorangegangenen Behälters durch die Behälterbehandlungsmaschine bestimmt.

Somit können die Ausführungsformen gemäß den Figuren 2 bis 4 auch auf die Bestimmung des Grenzwertes für einen durch die Behälterbehandlungsmaschine bewegten Behälter zur Kollisionsüberwachung angewendet werden.

## Patentansprüche

1. Verfahren zur Kollisionsüberwachung eines periodisch bewegten, elektrisch angetriebenen Bauteils (112) einer Behälterbehandlungsmaschine (100) mit einem anderen Bauteil (121) oder mit einem Behälter, wobei ein Grenzwert einer Messgröße, die indikativ für eine Kollision des bewegten Bauteils (112) mit dem anderen Bauteil (121) oder dem Behälter ist, festgelegt wird, bei dessen Überschreitung der Antrieb des Bauteils abgeschaltet wird, **dadurch gekennzeichnet, dass** der Grenzwert der Messgröße für eine aktuelle Periode der Bewegung des Bauteils dynamisch in Abhängigkeit von der während einer vorhergehenden Periode gemessenen Messgröße bestimmt wird.

2. Verfahren nach Anspruch 1, wobei der Grenzwert der Messgröße für eine aktuelle Periode der Bewegung des Bauteils dynamisch in Abhängigkeit von der während der unmittelbar vorhergehenden Periode gemessenen Messgröße bestimmt wird.

3. Verfahren nach Anspruch 1 oder 2, wobei der Grenzwert der Messgröße für eine aktuelle Periode sich von dem Grenzwert der Messgröße für eine vorhergehende Periode höchstens um einen maximalen absoluten Wert oder maximalen relativen Wert unterscheidet.

4. Verfahren nach Anspruch 3, wobei der maximale absolute Wert und/oder der maximale relative Wert in Abhängigkeit einer Betriebsdauer der Behälterbehandlungsmaschine (100) und/oder in Abhängigkeit des Alters des Bauteils und/oder in Abhängigkeit des Alters des das Bauteil antreibenden Motors (111) bestimmt wird.

5. Verfahren nach einem der Ansprüche 1 bis 4, wobei der Grenzwert eine über die gesamte Periodendauer nicht konstante Funktion ist oder über die Periodendauer konstant ist.

6. Verfahren nach einem der Ansprüche 1 bis 5, wobei die Messgröße wenigstens eines von einem auf das Bauteil übertragenen Drehmoment, einem Schleppfehler des Antriebs, einem Motorstrom, einem Lastmoment ist.

7. Verfahren nach einem der Ansprüche 1 bis 6, wobei, wenn festgestellt wird, dass eine Differenz aus dem Grenzwert der aktuellen Periode der Bewegung des Bauteils und dem Grenzwert der vorangegangenen Periode der Bewegung des Bauteils für eine Anzahl von aufeinander folgenden Perioden stets dasselbe Vorzeichen hat, zur Bestimmung des Grenzwertes der Messgröße weiterhin Zustandswerte des Antriebs in Echtzeit erfasst und berücksichtigt werden.

8. Verfahren nach Anspruch 7, wobei aus der Berücksichtigung der Zustandswerte des Antriebs ein zeitlich abhängiger Korrekturwert abgeleitet wird, der dasselbe Vorzeichen hat und zum berechneten Grenzwert für eine aktuelle Periode dazu addiert wird.

9. Verfahren nach einem der Ansprüche 1 bis 8, wobei zusätzlich zum Grenzwert bei der Erkennung einer Kollision Betriebszustände umfassend wenigstens eines von einer Beschleunigung des Bauteils, Leerlauf oder Produktion, berücksichtigt werden.

10. Behälterbehandlungsmaschine (100) zum Behandeln von Behältern (130), wie beispielsweise Flaschen, umfassend wenigstens ein periodisch bewegbares, elektrisch angetriebenes Bauteil (112), wobei eine Steuereinheit (150) zum Steuern der Bewegung des Bauteils (112) vorgesehen ist und wobei wenigstens ein Sensor vorgesehen ist, der eine für die Bewegung des Bauteils (112) indikative Messgröße erfassen kann, **dadurch gekennzeichnet, dass** die Behälterbehandlungsmaschine (100) ausgebildet ist, ein Verfahren zur Kollisionsüberwachung gemäß einem der Ansprüche 1 bis 9 durchzuführen.

11. Behälterbehandlungsmaschine (100) nach Anspruch 10, wobei die Behälterbehandlungsmaschine (100) wenigstens eines von Sensoren zum Erfassen Position des Bauteils, Sensoren zum Erfassen der der Beschleunigung des Bauteils, Sensoren zum Erfassen von Temperaturwerten, die indikativ für die Funktion des Antriebs sind, Sensoren zum Erfassen des Lastmoments des Bauteils umfasst.

12. Behälterbehandlungsmaschine (100) nach Anspruch 10 oder 11, wobei der Steuereinheit ein nichtflüchtiger Speicher zugeordnet ist, in dem berechnete Grenzwerte gespeichert werden können und von der Steuereinheit (150) zur weiteren Verwendung wieder aufgerufen werden können.

13. Behälterbehandlungsmaschine nach Anspruch 12, wobei in dem nichtflüchtigen Speicher weiterhin Betriebsparameter, die für die Berechnung der Grenzwerte benutzt werden können, gespeichert und von der Steuereinheit wieder aufgerufen werden können.

14. Verfahren zur Kollisionsüberwachung eines in einer Behälterbehandlungsmaschine (100) transportierten Behälters (130) mit einem Bauteil (121) oder mit einem anderen in der Behälterbehandlungsmaschine transportierten Behälter, wobei ein Grenzwert einer Messgröße, die indikativ für eine Kollision des Behälters (130) mit dem Bauteil (121) oder dem anderen Behälter ist, festgelegt wird, bei dessen Überschreitung der Betrieb der Behälterbehandlungsmaschine angehalten wird, **dadurch gekennzeichnet, dass** der Grenzwert der Messgröße für die Bewegung eines aktuellen, durch die Behälterbehandlungsmaschine transportierten Behälters dynamisch in Abhängigkeit von der während der Bewegung eines vorangegangen, durch die Behälterbehandlungsmaschine transportierten Behälters gemessenen Messgröße bestimmt wird.

15. Behälterbehandlungsmaschine (100) zum Behandeln von Behältern (130), wie beispielsweise Flaschen, wobei eine Steuereinheit (150) zum Steuern der Bewegung der Behälter durch die Behälterbehandlungsmaschine (100) vorgesehen ist und wobei wenigstens ein Sensor vorgesehen ist, der eine für die Bewegung eines Behälters durch die Behälterbehandlungsmaschine indikative Messgröße erfassen kann, **dadurch gekennzeichnet, dass** die Behälterbehandlungsmaschine (100) ausgebildet ist, ein Verfahren zur Kollisionsüberwachung gemäß Anspruch 14 durchzuführen.

## Claims

1. Method for collision monitoring for a periodically moving, electrically driven component (112) of a container handling machine with another component (121) or a container, wherein a limit value for a measured variable that is indicative of a collision between the movable component (112) and the other component (121) or the container is stipulated that, when exceeded, prompts the drive of the component to be shut down, **characterized in that** the limit value for the measured variable is determined dynamically for a current period of the movement of the component on the basis of the measured variable measured during a preceding period.

2. Method according to claim 1, wherein the limit value of the measured variable for a current period of movement of the component is dynamically determined on the basis of the measured variable measured during the directly preceding period.

3. Method according to claim 1 or 2, wherein the limit value of the measured variable for a current period differs from the limit value of the measured variable of a preceding period at the most by a maximum absolute value or maximum relative value.

4. Method according to claim 3, wherein the maximum absolute value and/or the maximum relative value is determined on the basis of an operating duration of the container handling machine (100) and/or on the basis of the age of the component and/or on the basis of the age of the motor (111) driving the component.

5. Method according to one of the claims 1 to 4, wherein the limit value is a non-constant function over the entire period duration or is constant over the entire period duration.

6. Method according to one of the claims 1 to 5, wherein the measured variable is at least one of a torque transmitted to the component, a contouring error of the drive, or a motor current or a load torque.

7. Method according to one of the claims 1 to 6, wherein, if it is determined that a difference from a limit value of the current period of movement of the component and the limit value of the preceding period of movement of the component always has the same sign for a number of successive periods, for determining the limit value of the measured variable, further state values of the drive in real time are collected and taken into account.

8. Method according to claim 7, wherein from taking into account the state values of the drive, a time-depending correction value is derived, which has the same sign and which is added to the calculated limit value for a current period.

9. Method according to one of the claims 1 to 8, wherein in addition to the limit value during detecting a collision, operating states including at least one of an acceleration of the component, idling or production, is taken into account.

10. Container handling machine (100) for handling containers (130), such as bottles comprising at least one periodically moving, electrically driven component (112), wherein a control unit (150) for controlling the movement of the component (112) is provided and wherein at least one sensor is provided, which can collect a measured variable, which is indicative of the movement of the component (112), **characterized in that** the container handling machine (100) is configured to carry out a method for collision monitoring according to the claims 1 to 9.

11. Container handling machine (100) according to claim 10, wherein the container handling machine (100) comprises at least one of the sensors for detecting the position of the component, sensors for detecting the acceleration of the component, sensors for detecting of temperature values, which are indicative of the function of the drive, and sensors for detecting the load of the component.

12. Container handling machine (100) according to claim 10 or 11, wherein a non-volatile memory is assigned to the control unit, in which calculated limit values may be stored and retrieved by the control unit (150) for further use.

13. Container handling machine according to claim 12, wherein in the non-volatile memory further operating parameters, which can be used for calculating the limit values, may be stored and retrieved by the control unit.

14. Method for collision monitoring of a container (130) transported in a container handling machine (100) with a component (121) or with another container transported in the container handling machine, wherein a limit value of a measured variable, which is indicative of a collision of the container (130) with the component (121) or with the other container, is stipulated that, when exceeded, the operation of the container handling machine is shutdown, **characterized in that** the limit value of the measured variable for the movement of a current container is dynamically determined on the basis of a measured variable measured during the movement of a preceding container that had been transported by the container handling machine.

15. Container handling machine (100) for handling containers (130), such as bottles, wherein a control unit (150) for controlling the movement of the container through the container handling machine (100) is provided and wherein at least one sensor is provided, which can collect a measured variable, which is indicative of the movement of a container, **characterized in that** the container handling machine (100) is configured to carry out a method for collision monitoring according to claim 14.

## Revendications

1. Procédé de surveillance des collisions d'un élément (112), entraîné électriquement et déplacé de manière périodique, d'une machine de traitement de récipients (100) avec un autre élément (121) ou avec un récipient, dans lequel une valeur limite d'une grandeur de mesure représentative d'une collision de l'élément (112) déplacé avec l'autre élément (121) ou avec le récipient est déterminée, dont le dépassement entraîne l'interruption de l'entraînement de l'élément, **caractérisé en ce que**, pour une période en cours du déplacement de l'élément, la valeur limite de la grandeur de mesure est déterminée de manière dynamique en fonction de la grandeur de mesure mesurée pendant une période précédente.

2. Procédé selon la revendication 1, dans lequel la valeur limite de la grandeur de mesure est déterminée de manière dynamique en fonction de la grandeur de mesure mesurée pendant la période immédiatement précédente.

3. Procédé selon la revendication 1 ou 2, dans lequel la valeur limite de la grandeur de mesure pour une période en cours diffère de la valeur limite de la grandeur de mesure pour une période précédente d'au plus une valeur absolue maximale ou une valeur relative maximale.

4. Procédé selon la revendication 3, dans lequel la valeur absolue maximale et/ou la valeur relative maximale est déterminée en fonction d'un temps de fonctionnement de la machine de traitement de récipients (100) et/ou en fonction de l'âge de l'élément et/ou en fonction de l'âge du moteur (111) entraînant l'élément.

5. Procédé selon l'une quelconque des revendications 1 à 4, dans lequel la valeur limite est une fonction non constante sur toute la durée de période ou est constante sur la durée de période.

6. Procédé selon l'une quelconque des revendications 1 à 5, dans lequel la grandeur de mesure est au moins une valeur parmi un couple transmis au composant, une erreur de poursuite de l'entraînement, un courant de moteur, un couple de charge.

7. Procédé selon l'une quelconque des revendications 1 à 6, dans lequel, s'il est établi qu'une différence entre la valeur limite de la période en cours du déplacement de l'élément et la valeur limite de la période précédente du déplacement de l'élément présente constamment le même signe pendant un certain nombre de périodes successives, des valeurs d'état de l'entraînement sont détectées en temps réel et prises en compte de manière supplémentaire afin de déterminer la valeur limite de la grandeur de mesure.

8. Procédé selon la revendication 7, dans lequel une valeur de correction dépendante du temps et présentant le même signe est dérivée de la prise en compte des valeurs d'état de l'entraînement et est ajoutée pour une période de temps en cours à la valeur limite calculée.

9. Procédé selon l'une quelconque des revendications 1 à 8, dans lequel des états de fonctionnement, comprenant au moins un état parmi une accélération de l'élément, un fonctionnement au ralenti ou une production, sont pris en compte en plus de la valeur limite dans la détection d'une collision.

10. Machine de traitement de récipients (100) permettant de traiter des récipients (130), tels que des bouteilles, comprenant au moins un élément (112) entraîné électriquement et déplacé de manière périodique, dans laquelle une unité de commande (150) permettant de commander le déplacement de l'élément (112) est fournie et dans laquelle au moins un capteur pouvant détecter une grandeur de mesure représentative du déplacement de l'élément (112) est fourni, **caractérisée en ce que** la machine de traitement de récipients (100) est conçue pour mettre en œuvre un procédé de surveillance des collisions selon l'une quelconque des revendications 1 à 9.

11. Machine de traitement de récipients (100) selon la revendication 10, dans laquelle la machine de traitement de récipients (100) comprend au moins un capteur parmi des capteurs permettant de détecter la position de l'élément, des capteurs permettant de détecter l'accélération de l'élément, des capteurs permettant de détecter des valeurs de température représentatives de la fonction de l'entraînement, des capteurs permettant de détecter le couple de charge de l'élément.

12. Machine de traitement de récipients (100) selon la revendication 10 ou 11, dans laquelle l'unité de commande est associée à une mémoire non volatile au sein de laquelle des valeurs limites calculées peuvent être stockées et peuvent être rappelées par l'unité de commande (150) pour une utilisation ultérieure.

13. Machine de traitement de récipients selon la revendication 12, dans laquelle des paramètres de fonctionnement pouvant être utilisés pour le calcul des valeurs limites peuvent en outre être stockés dans la mémoire non volatile et être rappelés par l'unité de commande.

14. Procédé de surveillance des collisions d'un récipient (130) transporté dans une machine de traitement de récipients (100) avec un élément (121) ou avec un autre récipient transporté dans la machine de traitement de récipients, dans lequel une valeur limite d'une grandeur de mesure représentative d'une collision du récipient (130) avec l'élément (121) ou l'autre récipient est déterminée, dont le dépassement entraîne l'arrêt du fonctionnement de la machine de traitement de récipients, **caractérisé en ce que** la valeur limite de la grandeur de mesure pour le déplacement d'un récipient en cours de transport par la machine de traitement de récipients est déterminée de manière dynamique en fonction de la grandeur de mesure mesurée pendant le déplacement d'un récipient précédent transporté par la machine de traitement de récipients.

15. Machine de traitement de récipients (100) permettant de traiter des récipients (130), tels que des bouteilles, dans laquelle une unité de commande (150) permettant de commander le déplacement des récipients à travers la machine de traitement de récipients (100) est fournie, et dans laquelle au moins un capteur pouvant détecter une grandeur de mesure représentative du déplacement d'un récipient à travers la machine de traitement de récipients est fourni, **caractérisée en ce que** la machine de traitement de récipients (100) est conçue pour mettre en oeuvre un procédé de surveillance des collisions selon la revendication 14.
